# EUROPÄISCHE PATENTANMELDUNG

(11) **EP 3 912 936 A1**
(43) Veröffentlichungstag der Anmeldung: **24.11.2021**
(21) Anmeldenummer: 20175408.2
(22) Anmeldetag: 19.05.2020
(51) Int. Cl.: B65G 47/86, B66F 3/08, F16H 25/20

(54) **FÜHRUNGSEINRICHTUNG SOWIE GREIF- UND TRANSPORTVORRICHTUNG ZUM GREIFEN, HALTEN, FÜHREN UND TRANSPORTIEREN VON FLASCHENARTIGEN BEHÄLTERN**

(71) Anmelder: Tyrolon-Schulnig GmbH, 6395 Hochfilzen (AT)
(72) Erfinder: Schulnig, Elmar, 6392 St. Jakob i.H. (AT)
(74) Vertreter: Rupprecht, Kay

(57) **Zusammenfassung**

Die Erfindung betrifft eine Führungseinrichtung für eine Stellplatte 2 von einer Transportvorrichtung 1 zum Greifen, Halten, Führen und Transportieren von flaschenartigen Behältern. Mit dem Ziel einer verdrehsicheren Führung und Stabilisierung der Stellplatte und/oder den Greifeinrichtungen weist die Führungseinrichtung einen länglich geformten Hohlkörper 6 mit mehreren Führungsausnehmungen 9 auf, die jeweils entlang des Hohlkörpers 6 ausgebildet sind. Ebenso wird eine Transportvorrichtung mit einer derartigen Führungseinrichtung bereitgestellt.

## Beschreibung

Die Erfindung betrifft eine Führungseinrichtung für eine Stellplatte von einer Greif- und Transportvorrichtung für Behälter. Des Weiteren betrifft die Erfindung eine Greif- und Transportvorrichtung zum Greifen, Halten, Führen und Transportieren von insbesondere flaschenartigen Behältern, mit einer derartigen Führungseinrichtung als Höhenverstelleinrichtung.

Greif- und Transportvorrichtungen zum Greifen, Halten und/oder Führen von Behältern sind bereits aus dem Stand der Technik bekannt, insbesondere unter dem Namen "Klammerstern". Greif- und Transportvorrichtungen weisen eine Vielzahl von Greifeinrichtungen mit Greifarmpaaren auf. Sie werden vornehmlich bei der fließbandtechnischen Bearbeitung von Behältern bzw. Behältnissen verwendet, die insbesondere zur Befüllung mit Flüssigkeiten oder anderweitigem Schüttgut vorgesehen sind.

Die Massenverarbeitung von derartigen Behältern bzw. Behältnissen macht regelmäßige Umstellungen der Greif- und Transportvorrichtungen auf die jeweils unterschiedlichen Behältertypen notwendig. Solche Behältertypen können sich in ihrer allgemeinen Formgebung, insbesondere in ihrer Höhe, ihrer Breite bzw. ihrem Durchmesser, wesentlich voneinander unterscheiden.

Eine fließbandtechnische Bearbeitung von großen Stückzahlen an Behältern macht gleichfalls eine Justierung der Greif- und Transportvorrichtungen zwingend notwendig, um eine sichere Handhabung durch die Greif- und Transportvorrichtung gewährleisten zu können und Ausschuss im Sinne von fehlerhafter Befüllung, fehlerhafter Etikettierung oder zerstörten Behältern zu vermeiden.

Darüber hinaus sind auch hygienische Aspekte innerhalb der fließbandtechnischen Produktionslinie, insbesondere bei Abfüllung bzw. Weiterverarbeitung von Lebensmitteln oder dergleichen, zu berücksichtigen.

Bei bekannten Anlagen besteht der Nachteil, dass eine Höhenverstellung zur Anpassung auf verschiedene Typen von zu verarbeitenden Behältern eine umfangreiche Umrüstung der Maschinen notwendig macht. Während des Umrüstungsprozesses muss ein vollständiger Maschinenstillstand in Kauf genommen werden. In der Folge ist die Umstellung auf verschiedene Behältertypen zeit- und kostenaufwendig.

Es existieren bereits Greif- und Transportvorrichtungen, bei denen eine Stellplatte mit Greifeinrichtungen oder Greifeinrichtungen selbst höhenverstellbar sind. Diese Ausgestaltungen zeigen jedoch zahlreiche Nachteile, da zusätzliche Bauteile zum verdrehsicheren Führen und Stabilisieren der Stellplatte und/oder der Greifeinrichtungen bei einer Höhenverstellung notwendig sind.

Der Erfindung liegt die Aufgabe zu Grunde, eine vorteilhafte Höhenverstellung der Greifeinrichtungen sowie eine Greif- und Transportvorrichtung zum Greifen, Halten, Führen und Transportieren von Behältern zur Verfügung zu stellen, wobei eine einfache, schnelle und kostengünstige Höhenverstellung in Verbindung mit einer vereinfachten Instandhaltung und Umrüstung bereitgestellt sein soll.

Diese Aufgabe wird durch eine Führungseinrichtung gemäß dem unabhängigen Anspruch 1 sowie einer Greif- und Transportvorrichtung gemäß dem unabhängigen Anspruch 9 gelöst. Weitere vorteilhafte Ausbildungen der erfindungsgemäßen Gegenstände sind in den abhängigen Ansprüchen angegeben.

Im Detail wird eine Führungseinrichtung für eine Stellplatte von einer Transportvorrichtung zum Greifen, Halten, Führen und Transportieren von flaschenartigen Behältern bereitgestellt. Die Führungseinrichtung ist durch einen länglich geformten Hohlkörper mit mehreren Führungsausnehmungen gekennzeichnet, die jeweils entlang des Hohlkörpers ausgebildet sind.

Dies hat den Vorteil, sowohl eine Führung, Stabilisierung und/oder Aufnahme für eine oder mehrere Stellplatten in bzw. durch die Führungseinrichtung bereitzustellen. Hierbei sind die Führungsausnehmungen vorzugsweise identisch zueinander ausgeformt, um eine gleichmäßige Bewegung der Stellplatte bei der Höhenverstellung entlang des Hohlkörpers zu ermöglichen.

In einer weiteren vorteilhaften Ausführungsform sind der Hohlkörper als Hohlzylinder und die Führungsausnehmungen geradlinig mit einer gleichbleibenden Breite und äquidistant zueinander ausgebildet. Ein Hohlzylinder ist einfacher und kostengünstiger herstellbar, wobei andere Formen des Hohlkörpers möglich sind, wie z.B. eine Röhre bzw. Hülse mit quadratischem Querschnitt oder ein kegelförmiger Hohlkörper. Die geradlinige Form der Ausnehmungen ist insbesondere für eine verdrehsichere Führung von Vorteil.

Ebenfalls hat es sich als vorteilhaft herausgestellt, wenn die Führungsausnehmungen jeweils Rastausbuchtungen derart aufweisen, dass die Stellplatte auf bestimmten Höhen verdrehfest einsetzbar ist. Hierzu kann die Rastausbuchtung ähnlich einem Bajonettverschluss ausgebildet sein, die mit der Stellplatte oder einem Teil davon in Wirkeingriff gelangt.

Zum leichteren Einsetzen einer Stellplatte in die Führungseinrichtung und gleichzeitigem Bereitstellen einer Verdrehsicherung erstrecken sich die Führungsausnehmungen bis zu einem Ende des Hohlkörpers vorzugsweise derart, dass Abschnitte der Stellplatte in den Hohlkörper, insbesondere in die Führungsausnehmungen, von diesem Ende aus einsetzbar sind.

Neben der Verdrehsicherung kann die Führungseinrichtung eine innerhalb des Hohlkörpers angeordneten Höhenverstellachse vorzugsweise aufweisen, die mit einer oder mehreren Stellplatten verbindbar und zumindest teilweise oder abschnittsweise verschiebbar und/oder drehbar gelagert ist. Dadurch kann die Führungseinrichtung selbst eine Höhenverstellfunktion für die Stellplatte bereitstellen.

Als vorteilhafte Ausgestaltung weist die Höhenverstellachse eine längliche Hülse und einen innerhalb der Hülse angeordneten Stab auf, wobei die Hülse zur Höhenverstellung über den Stab verschiebbar und/oder drehbar ist. Während der Stab als Führung und Stabilisierung der Hülse dient, ist die Hülse mit der Stellplatte verbunden bzw. verbindbar und entlang des Stabs verschiebbar bzw. axial verlagerbar.

Gemäß einer weiteren bevorzugten Ausgestaltung ist die Höhenverstellachse zumindest teil- oder abschnittsweise spindelförmig ausgebildet. Dadurch kann eine präzisere Hubbewegung der Höhenverstellachse oder Teile davon mittels einer Rotation der Spindel bereitgestellt werden.

Zur Material- und/oder Gewichtseinsparung sind vorteilhafterweise ein oder mehrere insbesondere rechteckige bzw. fensterartige/förmige Aussparungen bzw. Ausnehmungen jeweils zwischen den Führungsausnehmungen ausgebildet. Diese sind vorzugsweise äquidistant und identisch zueinander ausgeformt und angeordnet. Diese fensterartigen Aussparungen bilden auch einen besseren Zugang in das Innere der Führungseinrichtung, insbesondere des Hohlkörpers, und erlauben damit eine einfachere und schnellere Reinigung des Innenraums.

Erfindungsgemäß wird eine Greif- und Transportvorrichtung zum Greifen, Halten, Führen und Transportieren von insbesondere flaschenartigen Behältern, mit mindestens einer Stellplatte bereitgestellt, wobei auf der Stellplatte eine Vielzahl von Greifeinrichtungen befestigt und/oder befestigbar ist. Hierbei weist die Transportvorrichtung eine erfindungsgemäße Führungseinrichtung auf, wobei die Stellplatte mit der Führungseinrichtung derart befestigt und in Wirkeingriff steht, dass die Stellplatte verdrehsicher und höhenverstellbar ist.

Vorzugsweise ist die Stellplatte durch manuelle Betätigung der Führungseinrichtung und/oder durch einen Motor der Führungseinrichtung höhenverstellbar, wobei der Motor innerhalb oder auf dem Hohlkörper angeordnet ist.

Es hat sich ebenfalls als vorteilhaft erwiesen, wenn die Stellplatte Führungsstege aufweist, die sich durch die Führungsausnehmungen erstrecken und durch diese bei einer Höhenverstellung geführt werden. Dabei sind die Stege und/oder die Führungsausnehmungen derart ausgebildet und/oder in Wirkeingriff miteinander, dass für eine Höhenverstellung bzw. Verschiebung ausreichend Spiel vorzugsweise ohne Verkippen bereitgestellt ist. So können neben den sich gegenüberliegenden Flächen der Stege und Führungsausnehmungen zusätzliche Führungselemente ausgebildet sein, wie z.B. Nut-Federsysteme, um die Führung der Stellplatte zu verbessern.

Um eine stabile Lagerung für die Stellplatte bereitzustellen, sind die Führungsstege vorzugsweise mit der Führungseinrichtung, insbesondere mit der Höhenverstellachse, verbunden bzw. befestigt.

In einer weiteren vorteilhaften Ausführungsform ist die Führungseinrichtung koaxial zu einer Drehachse der Greif- und Transportvorrichtung angeordnet und auf dieser befestigt. Zusätzlich ist die Führungseinrichtung vorzugsweise rotationssymmetrisch ausgebildet. Dadurch wird eine Unwucht bei der Rotation der Transportvorrichtung und damit mögliche Schäden vermieden.

Die nachfolgend beschriebenen Figuren beziehen sich auf bevorzugte Ausführungsbeispiele der erfindungsgemäßen Führungseinrichtung als auch der erfindungsgemäßen Greif- und Transportvorrichtung, wobei diese Figuren nicht als Einschränkung, sondern im Wesentlichen der Veranschaulichung der Erfindung dienen. Elemente aus unterschiedlichen Figuren, aber mit denselben Bezugszeichen sind identisch; daher ist die Beschreibung eines Elements aus einer Figur für gleichbezeichnete bzw. gleichnummerierte Elemente aus anderen Figuren auch gültig.

An dieser Stelle sei darauf hingewiesen, dass alle oben beschriebenen Teile bzw. Merkmale für sich alleine gesehen und in jeder Kombination, insbesondere die in den Zeichnungen dargestellten Details als erfindungswesentlich beansprucht werden. Abänderungen hiervon sind dem Fachmann geläufig.

Es zeigen
- Fig. 1: eine perspektivische Ansicht auf eine Greif- und Transportvorrichtung mit einer Führungseinrichtung gemäß der vorliegenden Erfindung;
- Fig. 2: eine Seitenansicht auf die Greif- und Transportvorrichtung aus Fig. 1;
- Fig. 3: eine perspektivische Ansicht auf eine Greif- und Transportvorrichtung mit einer weiteren Führungseinrichtung gemäß der vorliegenden Erfindung; und
- Fig. 4: eine Seitenansicht auf die Greif- und Transportvorrichtung aus Fig. 3.

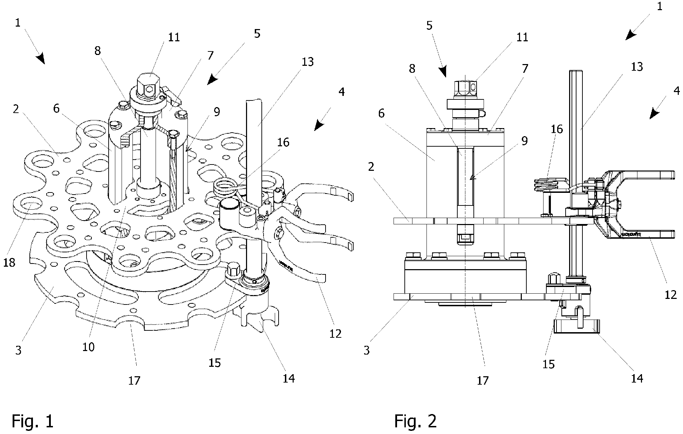

Die in Fig. 1 gezeigte Greif- und Transportvorrichtung 1 ist um eine senkrechte Drehachse rotierbar und weist eine Trägerplatte 3 und eine höhenverstellbare Stellplatte 2 auf. Eine Führungseinrichtung 5 ist koaxial auf einer Oberseite der Transportvorrichtung 1 oberhalb der Trägerplatte 3 befestigt. Die Führungseinrichtung 5 weist einen Hohlzylinder 6, ein Abdeckungselement 7, eine Höhenverstellachse 8 sowie eine Höhenverstellschraube 11 auf. Der Hohlzylinder 6 ist mit senkrecht ausgebildeten Führungsausnehmungen 9 versehen, um die Stellplatte 2 entlang der Drehachse zu führen. Hierzu sind Führungsstege 10 der Stellplatte 2 in den Führungsaufnehmungen 9 verschiebbar angeordnet und derart ausgebildet, dass eine verdrehsichere Bewegung entlang der Drehachse, auch als Höhenverstellung der Stellplatte 2 bezeichnet, ermöglicht wird. Die Führungsstege 10 verlaufen sternförmig zur Höhenverstellachse 8 und sind an dieser derart befestigt, dass durch Betätigung der Höhenverstellachse 8, insbesondere der mit der Höhenverstellachse 8 verbundenen Höhenverstellschraube 11, die Stellplatte 2 höhenverstellt wird. Das Abdeckungselement 7 ist am oberen Ende des Hohlzylinders 6 verschraubt. In der Mitte des Abdeckungselements 7 ist die Höhenverstellachse 8 drehbar gelagert, wobei die mit der Höhenverstellachse 8 verbundene Höhenverstellschraube 11 auf der Oberseite des Abdeckungselements 7 angeordnet ist. Dadurch kann manuell oder durch einen hinzufügbaren Motor die Höhenverstellung der Stellplatte 2 durchgeführt werden. Die Transportvorrichtung 1 ist mit einer Vielzahl von Greifeinrichtung bestückbar, wobei in den hierin gezeigten Figuren nur eine Greifeinrichtung 4 der Übersicht halber gezeigt wird. Die Greifeinrichtung 4 weist ein Paar aus Greifarmen 12, ein Federelement 16 als Schließmittel, eine Steuernockenwelle 13 als Öffnungsmittel, ein Lagerungselement 15 sowie ein Betätigungselement 14 auf. Die Greifarme 12 sind mit deren jeweiligem Endteil am Außenrand der kreisförmigen Stellplatte 2 schwenkbar befestigt. Das Federelement 16 ist mit beiden Greifarmen 12 einer Greifeinrichtung 4 derart verbunden, dass eine Kraft zum Schließen der Greifarme 12 stets bereitgestellt wird. Die Steuernockenwelle 13 ist mittels eines Lagerungselements 15 um die eigene Längsachse rotierbar und an der Trägerplatte 3 befestigt und ist zusätzlich in einer Lagerungseinbuchtung 17 der Trägerplatte 3 angeordnet. Die Steuernockenwelle 13 verläuft durch eine kreisförmige Lagerungsbohrung 18 der Stellplatte 2 und ist zwischen den Greifarmen 14 der Greifeinrichtung 4 angeordnet. Am unteren Ende der Steuernockenwelle 13 ist das Betätigungselement 14 ausgebildet, durch dessen Betätigung die Steuernockenwelle 13 rotiert und die Greifarmeinrichtung 4 bzw. das Greifarmpaar 12 geöffnet wird.

In Fig. 2 wird die Greif- und Transportvorrichtung 1 aus Fig. 1 in der Seitenansicht gezeigt. Hierbei ist die Befestigung der Führungseinrichtung 5 mittels eines Flansches, der unterhalb der Stellplatte 2 ausgebildet ist, an der Transportvorrichtung 1 erkennbar. Die Führungsausnehmung 9 ist rechteckige geformt und zur Oberseite bzw. zum oberen Ende des Hohlzylinders 6 offen. Dadurch kann der Hohlzylinder 6 als ein Teil hergestellt werden, wobei aber eine mehrteilige Form des Hohlzylinders in anderen Ausführungsformen ebenfalls möglich ist.

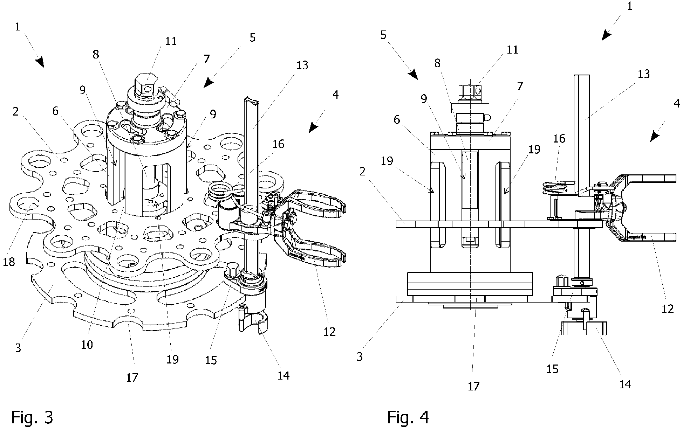

Die in Fig. 3 gezeigte Greif- und Transportvorrichtung 1 unterscheidet sich hinsichtlich des Hohlzylinders 6 und des Abdeckelements 7 von der Transportvorrichtung aus Fig. 1 bzw. 2. In dem Hohlzylinder 6 sind drei fenster- bzw. rechteckförmige Ausnehmungen 19 ausgebildet, wobei stets eine Ausnehmung 19 zwischen zwei Führungsausnehmungen 9 angeordnet ist. Diese Ausnehmungen 19 dienen einerseits einer Material- und Gewichtseinsparung und andererseits als Zugang in den Innenraum des Hohlzylinders 6, um den Hohlzylinder 6 und/oder etwaige Komponenten innerhalb des Hohlzylinders einfacher und schneller zu reinigen. In anderen Ausführungsformen können entsprechende, insbesondere einsetzbare Elemente der Stellplatte 2, wie z.B. Stifte, Bolzen oder ähnliches, in Wirkeingriff mit der Ausnehmung 19 sein bzw. in diese hineinragen, um eine zusätzliche Führung und/oder Höhenverstellungsgrenze zu bilden. Das Abdeckungselement 7 weist ebenfalls Aussparungen in Bogenform auf, um eine Material- und Gewichtseinsparung zu ermöglichen.

In Fig. 4 wird die Greif- und Transportvorrichtung 1 aus Fig. 3 in der Seitenansicht gezeigt. Hierbei erkennt man, dass der untere Rand der Führungsausnehmungen 9 und der Aussparung bzw. Ausnehmung 19 des Hohlzylinders 6 auf einer gleichen Höhe liegen.

### Bezuaszeichenliste

- 1: Transportvorrichtung
- 2: Stellplatte
- 3: Trägerplatte
- 4: Greifeinrichtung
- 5: Führungseinrichtung
- 6: Hohlzylinder
- 7: Abdeckungselement
- 8: Höhenverstellwelle/achse
- 9: Führungsausnehmung
- 10: Führungssteg
- 11: Höhenverstellschraube
- 12: Greifarm
- 13: Schaltachse bzw. Steuernockenwelle
- 14: Betätigungselement
- 15: Lagerungselement für Schaltachse
- 16: Schließmittel bzw. Federelement
- 17: Lagerungseinbuchtung der Trägerplatte
- 18: Lagerungsbohrung der Stellplatte
- 19: Aussparung/Fenster/Ausnehmungen

## Patentansprüche

1. Führungseinrichtung für eine Stellplatte (2) von einer Transportvorrichtung (1) zum Greifen, Halten, Führen und Transportieren von flaschenartigen Behältern,
**gekennzeichnet durch**
einen länglich geformten Hohlkörper (6) mit mehreren Führungsausnehmungen (9), die jeweils entlang des Hohlkörpers (6) ausgebildet sind.

2. Führungseinrichtung nach Anspruch 1,
**dadurch gekennzeichnet, dass**
der Hohlkörper (6) als Hohlzylinder und die Führungsausnehmungen (9) geradlinig mit einer gleichbleibenden Breite und äquidistant zueinander ausgebildet sind.

3. Führungseinrichtung nach Anspruch 1 oder 2,
**dadurch gekennzeichnet, dass**
die Führungsausnehmungen (9) jeweils Rastausbuchtungen derart aufweisen, dass die Stellplatte (2) auf bestimmten Höhen drehfest einsetzbar ist.

4. Führungseinrichtung nach einem der Ansprüche 1 bis 3,
**dadurch gekennzeichnet, dass**
sich die Führungsausnehmungen (9) bis zu einem Ende des Hohlkörpers (6) derart erstrecken, dass Abschnitte der Stellplatte (2) in den Hohlkörper (6), insbesondere in die Führungsausnehmungen (9), von diesem Ende aus einsetzbar sind.

5. Führungseinrichtung nach einem der Ansprüche 1 bis 4,
**gekennzeichnet durch**
eine innerhalb des Hohlkörpers (6) angeordneten Höhenverstellachse (8), die mit einer oder mehreren Stellplatten (2) verbindbar und zumindest teilweise oder abschnittsweise verschiebbar und/oder drehbar gelagert ist.

6. Führungseinrichtung nach Anspruch 5,
**dadurch gekennzeichnet, dass**
die Höhenverstellachse (8) eine längliche Hülse und einen innerhalb der Hülse angeordneten Stab aufweist, wobei die Hülse zur Höhenverstellung über den Stab verschiebbar und/oder drehbar ist.

7. Führungseinrichtung nach Anspruch 5 oder 6,
**dadurch gekennzeichnet, dass**
die Höhenverstellachse (8) zumindest teil- oder abschnittsweise spindelförmig ausgebildet ist.

8. Führungseinrichtung nach einem der Ansprüche 1 bis 7,
**gekennzeichnet durch**
ein oder mehrere insbesondere rechteckige Aussparungen (19), die jeweils zwischen den Führungsausnehmungen (9) ausgebildet sind.

9. Greif- und Transportvorrichtung zum Greifen, Halten, Führen und Transportieren von insbesondere flaschenartigen Behältern, mit mindestens einer Stellplatte (2), wobei auf der Stellplatte eine Vielzahl von Greifeinrichtungen (4) befestigt ist,
**gekennzeichnet durch**
eine Führungseinrichtung (5) nach einem der Ansprüche 1 bis 8,
wobei die Stellplatte (2) mit der Führungseinrichtung (5) derart befestigt und in Wirkeingriff steht, dass die Stellplatte (2) verdrehsicher und höhenverstellbar ist.

10. Greif- und Transportvorrichtung nach Anspruch 9,
**dadurch gekennzeichnet, dass**
die Stellplatte (2) durch manuelle Betätigung der Führungseinrichtung (5) und/oder durch einen Motor der Führungseinrichtung (5) höhenverstellbar ist, wobei der Motor innerhalb oder auf dem Hohlkörper (6) angeordnet ist.

11. Greif- und Transportvorrichtung nach Anspruch 9 oder 10,
**dadurch gekennzeichnet, dass**
die Stellplatte (2) Führungsstege (10) aufweist, die sich durch die Führungsausnehmungen (9) erstrecken und durch diese bei einer Höhenverstellung geführt werden.

12. Greif- und Transportvorrichtung nach Anspruch 11,
**dadurch gekennzeichnet, dass**
die Führungsstege (10) mit der Führungseinrichtung (5) verbunden bzw. befestigt sind.

13. Greif- und Transportvorrichtung nach einem der Ansprüche 9 bis 12,
**dadurch gekennzeichnet, dass**
die Führungseinrichtung (5) koaxial zu einer Drehachse der Greif- und Transportvorrichtung angeordnet und auf dieser befestigt ist.

## Geänderte Patentansprüche

### Geänderte Patentansprüche gemäss Regel 137(2) EPÜ.

1. Führungseinrichtung, die mit einer Stellplatte (2) nach Anspruch 9 zusammenwirkbar ist, wobei die Führungseinrichtung für eine Transportvorrichtung (1) zum Greifen, Halten, Führen und Transportieren von flaschenartigen Behältern ausgelegt ist,
**gekennzeichnet durch**
einen länglich geformten Hohlkörper (6) mit mehreren Führungsausnehmungen (9), die jeweils entlang des Hohlkörpers (6) ausgebildet sind, wobei in die Führungsausnehmungen (9) Führungsstege (10) der Stellplatte (2) erstreckbar sind und die Führungsstege (10) mit den Führungsausnehmungen (9) derart zusammenwirkbar sind, dass eine drehfeste und höhenverstellbare Anordnung der Stellplatte (2) gegenüber der Führungseinrichtung bereitgestellt ist.

2. Führungseinrichtung nach Anspruch 1,
**dadurch gekennzeichnet, dass**
der Hohlkörper (6) als Hohlzylinder und die Führungsausnehmungen (9) geradlinig mit einer gleichbleibenden Breite und äquidistant zueinander ausgebildet sind.

3. Führungseinrichtung nach Anspruch 1 oder 2,
**dadurch gekennzeichnet, dass**
die Führungsausnehmungen (9) jeweils Rastausbuchtungen derart aufweisen, dass die Stellplatte (2) auf bestimmten Höhen drehfest einsetzbar ist.

4. Führungseinrichtung nach einem der Ansprüche 1 bis 3,
**dadurch gekennzeichnet, dass**
sich die Führungsausnehmungen (9) bis zu einem Ende des Hohlkörpers (6) derart erstrecken, dass Abschnitte der Stellplatte (2) in den Hohlkörper (6), insbesondere in die Führungsausnehmungen (9), von diesem Ende aus einsetzbar sind.

5. Führungseinrichtung nach einem der Ansprüche 1 bis 4,
**gekennzeichnet durch**
eine innerhalb des Hohlkörpers (6) angeordneten Höhenverstellachse (8), die mit einer oder mehreren Stellplatten (2) verbindbar und zumindest teilweise oder abschnittsweise verschiebbar und/oder drehbar gelagert ist.

6. Führungseinrichtung nach Anspruch 5,
**dadurch gekennzeichnet, dass**
die Höhenverstellachse (8) eine längliche Hülse und einen innerhalb der Hülse angeordneten Stab aufweist, wobei die Hülse zur Höhenverstellung über den Stab verschiebbar und/oder drehbar ist.

7. Führungseinrichtung nach Anspruch 5 oder 6,
**dadurch gekennzeichnet, dass**
die Höhenverstellachse (8) zumindest teil- oder abschnittsweise spindelförmig ausgebildet ist.

8. Führungseinrichtung nach einem der Ansprüche 1 bis 7,
**gekennzeichnet durch**
ein oder mehrere insbesondere rechteckige Aussparungen (19), die jeweils zwischen den Führungsausnehmungen (9) ausgebildet sind.

9. Stellplatte (2) für eine Transportvorrichtung (1) zum Greifen, Halten, Führen und Transportieren von flaschenartigen Behältern, wobei auf der Stellplatte eine Vielzahl von Greifeinrichtungen (4) befestigbar sind und mit einer Führungseinrichtung nach einem der Ansprüche 1 bis 8 zusammenwirkbar ist,
**dadurch gekennzeichnet, dass**
die Stellplatte (2) Führungsstege (10) aufweist, die durch Führungsausnehmungen (9) der Führungseinrichtung erstreckbar sind, und die Führungsstege (10) mit den Führungsausnehmungen (9) derart zusammenwirkbar sind, dass eine drehfeste und höhenverstellbare Anordnung der Stellplatte (2) gegenüber der Führungseinrichtung bereitgestellt ist.

10. Greif- und Transportvorrichtung zum Greifen, Halten, Führen und Transportieren von insbesondere flaschenartigen Behältern, mit mindestens einer Stellplatte (2), wobei auf der Stellplatte eine Vielzahl von Greifeinrichtungen (4) befestigt ist,
**gekennzeichnet durch**
eine Führungseinrichtung (5) nach einem der Ansprüche 1 bis 8, und eine Stellplatte (2) nach Anspruch 9,
wobei die Stellplatte (2) mit der Führungseinrichtung (5) derart befestigt und in Wirkeingriff steht, dass die Stellplatte (2) verdrehsicher und höhenverstellbar ist, wobei sich Führungsstege (10) der Stellplatte (2) durch die Führungsausnehmungen (9) der Führungseinrichtung erstrecken und durch diese bei einer Höhenverstellung geführt werden.

11. Greif- und Transportvorrichtung nach Anspruch 10,
**dadurch gekennzeichnet, dass**
die Stellplatte (2) durch manuelle Betätigung der Führungseinrichtung (5) und/oder durch einen Motor der Führungseinrichtung (5) höhenverstellbar ist, wobei der Motor innerhalb oder auf dem Hohlkörper (6) angeordnet ist.

12. Greif- und Transportvorrichtung nach Anspruch 10 oder 11,
**dadurch gekennzeichnet, dass**
die Führungsstege (10) mit der Führungseinrichtung (5) verbunden bzw. befestigt sind.

13. Greif- und Transportvorrichtung nach einem der Ansprüche 8 bis 12, **dadurch gekennzeichnet, dass**
die Führungseinrichtung (5) koaxial zu einer Drehachse der Greif- und Transportvorrichtung angeordnet und auf dieser befestigt ist.
